(19) **Europäisches Patentamt**

**European Patent Office**

**Office européen des brevets**

(11) **EP 1 513 249 B1**

(12) **EUROPÄISCHE PATENTSCHRIFT**

(45) Veröffentlichungstag und Bekanntmachung des Hinweises auf die Patenterteilung:
**08.11.2006 Patentblatt 2006/45**

(51) Int Cl.:
**H02M 7/48** (2006.01)

(21) Anmeldenummer: **03405653.1**

(22) Anmeldetag: **08.09.2003**

(54) **Verfahren zur Symmetrierung eines Gleichspannungskreises einer Umrichterschaltung zur Schaltung von drei Spannungsniveaus**

Method for neutral-point balancing of a three-level inverter

Méthode pouréquilibrer le point neutre d'un onduleur à trois niveaux

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**09.03.2005 Patentblatt 2005/10**

(73) Patentinhaber: **ABB RESEARCH LTD.**
**8050 Zürich (CH)**

(72) Erfinder:
- **Gerhard, Bilal**
  **5443 Niederrohrdorf (CH)**
- **Herold, Simon**
  **8902 Urdorf (CH)**
- **Beiser, Dirk**
  **5417 Untersiggenthal (CH)**
- **Sario, Petteri**
  **5408 Ennetbaden (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(56) Entgegenhaltungen:
- **QIANG SONG ET AL: "A neutral-point potential balancing algorithm for three-level NPC inverters using analytically injected zero-sequence voltage" APEC 2003. 18TH. ANNUAL IEEE APPLIED POWER ELECTRONICS CONFERENCE AND EXPOSITION. MIAMI BEACH, FL, FEB. 9 - 13, 2003, ANNUAL APPLIED POWER ELECTRONICS CONFERENCE, NEW YORK, NY: IEEE, US, Bd. 1 OF 2. CONF. 18, 9. Februar 2003 (2003-02-09), Seiten 228-233, XP010631516 ISBN: 0-7803-7768-0**
- **ALONSO O ET AL: "Analysis of neutral-point voltage balancing problem in three-level neutral-point-clamped inverters with SVPWM modulation" IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002, ANNUAL CONFERENCE OF THE IEEE INDUSTRIAL ELECTRONICS SOCIETY, NEW YORK, NY: IEEE, US, Bd. 1 OF 4. CONF. 28, 5. November 2002 (2002-11-05), Seiten 920-925, XP010632826 ISBN: 0-7803-7474-6**

## Beschreibung

## Technisches Gebiet

Die Erfindung bezieht sich auf das Gebiet der Leistungselektronik. Sie geht aus von einem Verfahren zur Symmetrierung eines Gleichspannungskreises einer Umrichterschaltung zur Schaltung von drei Spannungsniveaus gemäss dem Oberbegriff des unabhängigen Anspruchs.

## Stand der Technik

Heute werden in vielen Anwendungen Hochleistungsspannungsumrichter eingesetzt. Ein solcher Umrichter schaltet gängigerweise drei Spannungsniveaus, wozu ein Gleichspannungskreis vorgesehen ist, der durch einen ersten Kondensator und durch einen in Serie zum ersten Kondensator geschalteten zweiten Kondensator gebildet ist. Der Gleichspannungskreis weist weiterhin am ersten Kondensator einen ersten Hauptanschluss, am zweiten Kondensator einen zweiten Hauptanschluss und einen durch die zwei seriell miteinander verbundenen Kondensatoren gebildeten Teilanschluss auf. Weiterhin umfasst der Umrichter zur Schaltung von drei Spannungsniveaus Leistungshalbleiterschalter, welche in üblicher Weise verschaltet sind.

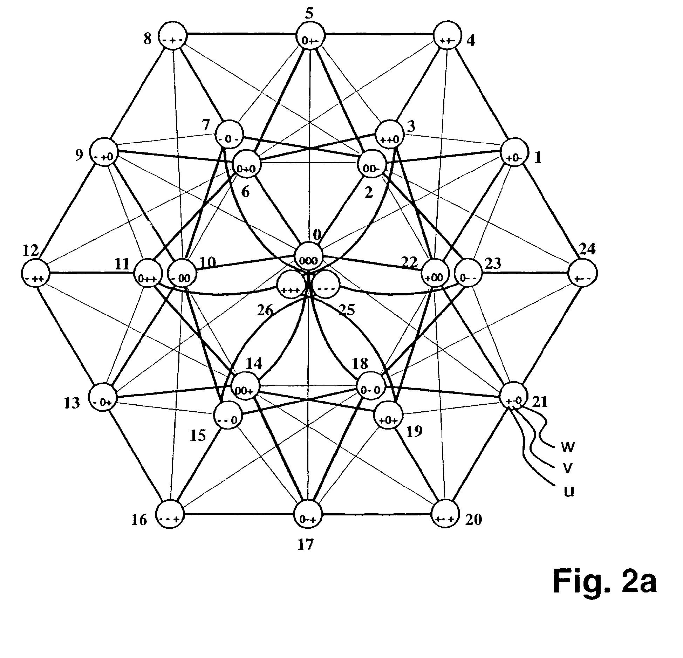

Während des Betriebs der Umrichterschaltung kann es nun vorkommen, dass entweder die am ersten Kondensator anliegende erste Gleichspannung grösser ist als die am zweiten Kondensator anliegende zweite Gleichspannung, oder dass die zweite Gleichspannung grösser ist als die erste Gleichspannung. Um dieser Unsymmetrie entgegenzuwirken, ist in "A comprehensive study of neutral-point voltage balancing problem in three-level NPC voltage source PWM inverter, IEEE Transactions on power electronics, Vol 15, No 2, March 2000, p. 242" ein Verfahren zur Symmetrierung eines Gleichspannungskreises einer Umrichterschaltung zur Schaltung von drei Spannungsniveaus angegeben. Zunächst wird aus einer am ersten Kondensator anliegenden ersten Gleichspannung und aus einer am zweiten Kondensator anliegenden zweiten Gleichspannung ein Gleichspannungsdifferenzwert gebildet. Weiterhin wird gemäss "A comprehensive study of neutral-point voltage balancing problem in three-level NPC voltage source PWM inverter, IEEE Transactions on power electronics, Vol 15, No 2, March 2000, p. 242" jede Phase der Umrichterschaltung durch Leistungshalbleiterschalter der Umrichterschaltung nach jeweils einer vorgegebenen Abfolge, sogenanntes Pulsmuster, von Schaltzuständen innerhalb einer vorgegebenen Zeitdauer mit dem ersten Hauptanschluss, mit dem zweiten Hauptanschluss oder mit dem Teilanschluss des Gleichspannungskreises verbunden, wobei die Schaltzustände der Phasen zueinander durch Schaltzustandskombinationen vorgegeben sind. In einem in Fig. 2a gezeigten Zustandsdiagramm sind diese Schaltzustandkombinationen und deren Übergänge zueinander gezeigt, wobei die "+" für eine Verbindung der entsprechenden Phase mit dem ersten Hauptanschluss, "-" für eine Verbindung der entsprechenden Phase mit dem zweiten Hauptanschluss und 0" für eine Verbindung der entsprechenden Phase mit dem Teilanschluss steht.

Darüber hinaus wird der vorstehend genannte Gleichspannungsdifferenzwert auf einen vorgebbaren ersten Schwellwert hin überwacht, wobei bei Überschreiten des ersten Schwellwertes, d.h. falls die erste Gleichspannung grösser ist als die zweite Gleichspannung, oder bei Unterschreiten des ersten Schwellwertes, d.h. falls die zweite Gleichspannung grösser ist als die erste Gleichspannung, die drei Phasen nach einer aus den Schaltzustandskombinationen ausgewählten Schaltzustandskombination mit dem ersten Hauptanschluss, mit dem zweiten Hauptanschluss oder mit dem Teilanschluss verbunden werden. Die Auswahl der geeigneten Schaltzustandskombination erfolgt in Abhängigkeit der vorangehenden Schaltzustandskombination, der Flussrichtung eines Phasenstromes und des Überschreitens oder des Unterschreitens des ersten Schwellwertes. Durch die vorstehend beschriebene Verbindung der drei Phasen mit dem ersten Hauptanschluss, mit dem zweiten Hauptanschluss oder mit dem Teilanschluss wird erreicht, dass beispielsweise bei einer auftretenden Unsymmetrie des Gleichspannungskreises im Betriebsfall der Umrichterschaltung, d.h. falls zum Beispiel die erste Gleichspannung betragsmässig grösser als die zweite Gleichspannung ist, die erste Gleichspannung betragsmässig verringert wird, so dass eine betragsmässige Angleichung an die zweite Gleichspannung erfolgt und somit eine symmetrische Verteilung der beiden Gleichspannungen des Gleichspannungskreis erzielt werden kann.

Problematisch bei dem in "A comprehensive study of neutral-point voltage balancing problem in three-level NPC voltage source PWM inverter, IEEE Transactions on power electronics, Vol 15, No 2, March 2000, p. 242" beschriebenen Verfahren zur Symmetrierung eines Gleichspannungskreises einer Umrichterschaltung zur Schaltung von drei Spannungsniveaus ist, dass bei einem grossen Modulationsgrad, insbesondere in der Grössenordnung zwischen 0.8 und 1, d.h. wenn die Umrichterschaltung nahezu voll ausgesteuert ist, nur Schaltzustandskombinationen für die Abfolgen der Phasen möglich sind, die sich gemäss dem in Fig. 2a gezeigten Zustandsdiagramm an den äusseren Punkten des Zustandsdiagramms befinden. Mittels dieser Schaltzustandskombinationen ist aber eine Symmetrierung des Gleichspannungskreises bei einer auftretenden Unsymmetrie des Gleichspannungskreises während des Betriebs der Umrichterschaltung nicht möglich, da die erste und zweite Gleichspannung durch diese Schaltzustandskombinationen nicht verringert oder vergrössert werden kann und somit nicht für eine Symmetrierung des Gleichspannungskreises beeinflusst werden kann.

## Darstellung der Erfindung

Aufgabe der Erfindung ist es deshalb, ein Verfahren zur Symmetrierung eines Gleichspannungskreises einer Umrichterschaltung zur Schaltung von drei Spannungsniveaus anzugeben, durch welches auch bei einer hohen Aussteuerung, d.h. bei einem grossen Modulationsgrad, Ungleichheiten in den Beträgen von Gleichspannungen an Kondensatoren des Gleichspannungskreises in einfacher Weise kompensiert werden können. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zur Symmetrierung eines Gleichspannungskreises einer Umrichterschaltung zur Schaltung von drei Spannungsniveaus ist der Gleichspannungskreis durch einen ersten Kondensator und durch einen in Serie zum ersten Kondensator geschalteten zweiten Kondensator gebildet und weist weiterhin am ersten Kondensator einen ersten Hauptanschluss, am zweiten Kondensator einen zweiten Hauptanschluss und einen durch die zwei seriell verbundenen Kondensatoren gebildeten Teilanschluss auf, wobei aus einer am ersten Kondensator anliegenden ersten Gleichspannung und aus einer am zweiten Kondensator anliegenden zweiten Gleichspannung ein Gleichspannungsdifferenzwert gebildet wird. Ferner wird jede Phase der Umrichterschaltung durch Leistungshalbleiterschalter der Umrichterschaltung nach jeweils einer vorgegebenen Abfolge von Schaltzuständen innerhalb einer vorgegebenen Zeitdauer mit dem ersten Hauptanschluss, mit dem zweiten Hauptanschluss oder mit dem Teilanschluss verbunden, wobei die Schaltzustände der Phasen zueinander durch Schaltzustandskombinationen vorgegeben sind. Darüber hinaus wird der Gleichspannungsdifferenzwert auf einen vorgebbaren ersten Schwellwert hin überwacht wird, wobei bei Überschreiten oder Unterschreiten des ersten Schwellwertes die Phasen nach einer aus den Schaltzustandskombinationen in Abhängigkeit der vorangehenden Schaltzustandskombination, der Flussrichtung eines Phasenstromes und des Überschreitens oder des Unterschreitens des ersten Schwellwertes ausgewählten Schaltzustandskombination mit dem ersten Hauptanschluss, mit dem zweiten Hauptanschluss oder mit dem Teilanschluss verbunden werden.

Erfindungsgemäss wird desweiteren der Modulationsgrad für jede Phase fortlaufend ermittelt und auf einen vorgebbaren Modulationsgradschwellwert hin überwacht. Bei Über- oder Unterschreiten des ersten Schwellwertes und bei Überschreiten des Modulationsgradschwellwertes wird dann der Modulationsgrad erfindungsgemäss durch Auswahl einer Abfolge aus den vorgegebenen Abfolgen für einen wählbaren Zeitraum verringert. Vorteilhaft kann durch die Verringerung des Modulationsgrades für einen bestimmten wählbaren Zeitraum die erste Gleichspannung beziehungsweise die zweite Gleichspannung sehr einfach beeinflusst werden, derart, dass Ungleichheiten in den Beträgen zwischen der ersten und zweiten Gleichspannung kompensiert werden können und somit eine Symmetrierung des Gleichspannungskreises in sehr einfacher Weise erfolgt. Die Verringerung des Modulationsgrades mittels einer bestimmten vorgegebenen Abfolge von Schaltzuständen für einen bestimmten wählbaren Zeitraum ermöglicht es mit Vorteil zudem, die gewünschte Symmetrierung des Gleichspannungskreises auch bei einer hohen Aussteuerung der Umrichterschaltung, d.h. bei einem grossen Modulationsgrad zu erreichen.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1     eine Ausführungsform einer dreiphasigen Umrichterschaltung zur Schaltung von drei Spannungsniveaus,

Fig. 2a     ein Zustandsdiagramm mit Schaltzustandkombinationen der Phasen der Umrichterschaltung,

Fig. 2b     typische Zeitverläufe der Phasenspannungen der Umrichterschaltung nach Fig. 1,

Fig. 2c     eine Tabelle mit aus Fig. 2a ausgewählten Schaltzustandskombinationen und

Fig. 3     ein Zeitverlauf einer Phasenspannung und zugehörigem Modulationsgrad.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

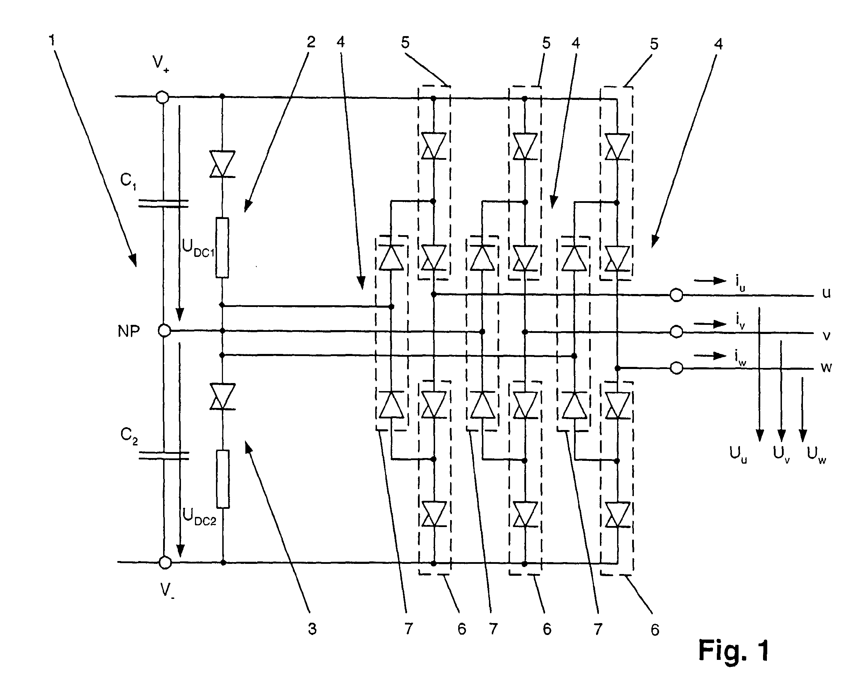

In Fig. 1 ist eine Ausführungsform einer dreiphasigen Umrichterschaltung zur Schaltung von drei Spannungsniveaus gezeigt. Die Umrichterschaltung nach Fig. 1 weist einen Gleichspannungskreis 1 auf, der durch einen ersten Kondensator $C_1$ und durch einen in Serie zum ersten Kondensator $C_1$ geschalteten zweiten Kondensator $C_2$ gebildet ist. Weiterhin weist der Gleichspannungskreis 1 am ersten Kondensator $C_1$ einen ersten Hauptanschluss $V_+$, am zweiten Kondensator $C_2$ einen zweiten Hauptanschluss V. und einen durch die zwei seriell verbundenen Kondensatoren $C_1$, $C_2$ gebildeten Teilanschluss NP auf. Darüber hinaus umfasst die Umrichterschaltung gemäss Fig. 1 ein für jede Phase u, v, w vorgesehenes Teilumrichtersystem 4, welches jeweils durch eine erste Schaltgruppe 5, durch eine zweite Schaltgruppe 6 und durch eine dritte Schaltgruppe 7 gebildet ist, wobei jede Schaltgruppe 5, 6, 7 durch zwei in Serie geschaltete Leistungshalbleiterschalter gebildet ist. Weiterhin ist bei jedem Teilumrichtersystem 4 die erste Schaltgruppe 5 mit dem ersten Hauptanschluss $V_+$ und die zweite Schaltgruppe 6 mit dem zweiten Hauptanschluss $V_-$ verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss NP verbunden. Die Leistungshalbleiterschalter der ersten und zweiten Schaltgruppe 5, 6 sind gemäss Fig. 1 als ansteuerbare bidirektionale Leistungshalbleiterschalter ausgebildet, wobei die Leistungshalbleiterschalter der dritten Schaltgruppe als unidirektionale nicht-ansteuerbare Halbleiterschalter ausgebildet sind. Es ist aber auch denkbar, das auch die Leistungshalbleiterschalter der dritten Schaltgruppe als ansteuerbare bidirektionale Leistungshalbleiterschalter ausgebildet sind.

Beim erfindungsgemässen Verfahren wird nun aus einer am ersten Kondensator $C_1$ anliegenden ersten Gleichspannung $U_{DC1}$ und aus einer am zweiten Kondensator $C_2$ anliegenden zweiten Gleichspannung $U_{DC2}$ ein Gleichspannungsdifferenzwert $\overline{U_{NP}}$ gebildet. Der Gleichspannungsdifferenzwert $\overline{U_{NP}}$ wird dabei nach folgender Formel generiert:

$$\overline{U_{NP}} = \left| U_{DC1} \right| - \left| U_{DC2} \right|$$

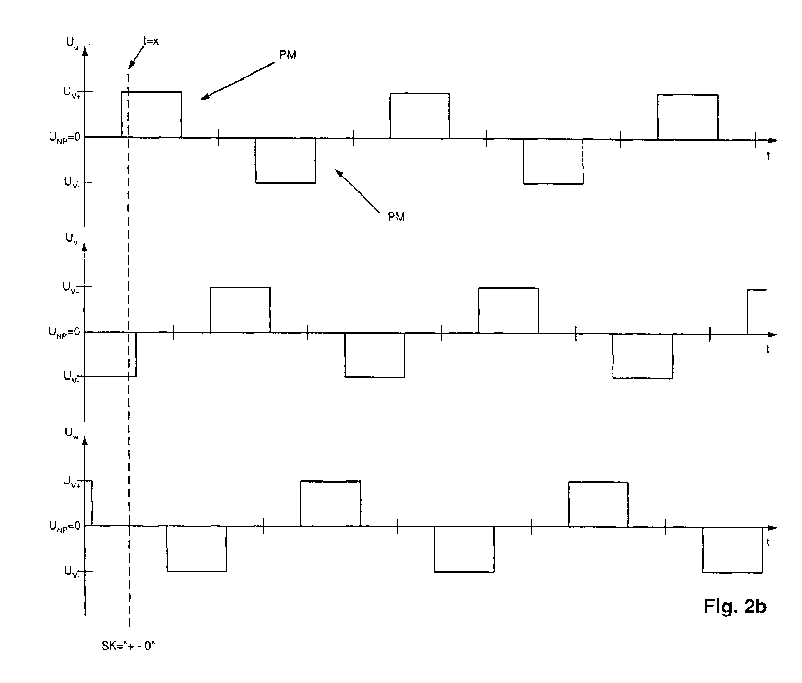

Ferner wird jede Phase u, w, v der Umrichterschaltung durch die Leistungshalbleiterschalter nach jeweils einer vorgegebenen Abfolge PM von Schaltzuständen innerhalb einer vorgegebenen Zeitdauer mit dem ersten Hauptanschluss $V_+$, mit dem zweiten Hauptanschluss $V_-$ oder mit dem Teilanschluss NP verbunden, wobei die Schaltzustände der Phasen u, v, w zueinander durch Schaltzustandskombinationen SK vorgegeben sind. Wie bereits eingangs erwähnt, ist in Fig. 2a ein Zustandsdiagramm dieser Schaltzustandskombinationen SK gezeigt, wobei "+" für eine Verbindung der entsprechenden Phase u, v, w mit dem ersten Hauptanschluss $V_+$, "-" für eine Verbindung der entsprechenden Phase u, v, w mit dem zweiten Hauptanschluss $V_-$ und "0" für eine Verbindung der entsprechenden Phase u, v, w mit dem Teilanschluss NP steht und die Linien zwischen den Schaltzustandskombinationen SK zulässige Übergänge zwischen den Schaltzustandskombinationen SK darstellen. In Fig. 2b sind typische Zeitverläufe der Phasenspannungen $U_u$, $U_v$, $U_w$ der Umrichterschaltung nach Fig. 1 dargestellt. Darin ist detailliert gezeigt, wie die einzelnen Phasenspannung $U_u$, $U_v$, $U_w$ durch die jeweiligen Abfolgen PM von Schaltzuständen gebildet werden, wobei als Beispiel bei der Phasenspannung $U_u$ für die Phase U eine Abfolge PM für die erste Hälfte der Periodendauer der Phasenspannung $U_u$ als vorstehend genannte vorgegebene Zeitdauer und eine Abfolge PM für die zweite Hälfte der Periodendauer der Phasenspannung $U_u$ als vorstehend genannte vorgegebene Zeitdauer speziell gekennzeichnet ist. Die Phasenspannungen $U_v$, $U_w$ der Phase v und Phase w ergeben sich gemäss Fig. 2b aus der Phasenspannung $U_u$ durch eine Phasenverschiebung um 120° beziehungsweise um 240°. Solche Abfolgen werden gängigerweise auch als sogenannte Pulsmuster bezeichnet. Bei den Schaltzuständen gemäss Fig. 2b werden nur Spannungen $U_{V+}$, 0 oder $U_{V-}$ geschaltet, wobei bei einem symmetrischen Gleichspannungskreis 1 $U_{DC1}=U_{DC2}=U_{V+}=-U_{V-}$ ist. Ferner ist in Fig. 2b beispielhaft eine Schaltzustandskombination SK der Phasen u, v, w zueinander zum Zeitpunkt t=x herausgestellt, welche sich zu SK="+ - 0" ergibt und der Schaltzustandskombination 21 gemäss Fig. 2a entspricht.

Beim erfindungsgemässen Verfahren wird nun weiterhin der vorstehend erwähnte Gleichspannungsdifferenzwert $\overline{U_{NP}}$ auf einen vorgebbaren ersten Schwellwert $U_{DCS1}$ hin überwacht, wobei bei Überschreiten oder Unterschreiten des ersten Schwellwertes $U_{DCS1}$ die Phasen u, v, w nach einer aus den Schaltzustandskombinationen SK in Abhängigkeit der vorangehenden Schaltzustandskombination SK, der Flussrichtung eines Phasenstromes $i_u$, $i_v$, $i_w$ und des Überschreitens oder des Unterschreitens des ersten Schwellwertes $U_{DCS1}$ ausgewählten Schaltzustandskombination SK mit dem ersten Hauptanschluss $V_+$, mit dem zweiten Hauptanschluss $V_-$ oder mit dem Teilanschluss NP verbunden werden. Durch die vorstehend beschriebenen Massnahmen, d.h. durch die Verbindung der drei Phasen u, v, w mit dem ersten Hauptanschluss $V_+$, mit dem zweiten Hauptanschluss $V_-$ oder mit dem Teilanschluss NP wird insbesondere bei kleinen und mittleren Aussteuerungen der Umrichterschaltung, d.h. bei Modulationsgraden m unter 0,8 , erreicht, dass beispielsweise bei einer auftretenden Unsymmetrie des Gleichspannungskreises 1 im Betriebsfall der Umrichterschaltung, d.h. falls zum Beispiel die ersten Gleichspannung $U_{DC1}$ betragsmässig grösser als die zweite Gleichspannung $U_{DC2}$ ist, die erste Gleichspannung $U_{DC1}$ betragsmässig verringert wird, so dass eine betragsmässige Angleichung an die zweite Gleichspannung $U_{DC2}$ erfolgt und somit eine symmetrische Verteilung der beiden Gleichspannungen $U_{DC1}$, $U_{DC2}$ des Gleichspannungskreis 1 erzielt werden kann.

Erfindungsgemäss wird desweiteren der Modulationsgrad m für jede Phase fortlaufend ermittelt und auf einen vorgebbaren Modulationsgradschwellwert $S_m$ hin überwacht. Der Modulationsgrad m ergibt sich dabei beispielhaft für die Phase u gemäss folgender Formel zu

$$m = \frac{\hat{U}_u}{U_{DC1}} \cdot \frac{4}{\pi}$$

wobei $\hat{U}_u$ der Amplitudenwert der Phasenspannung $U_u$ ist. Für die anderen Phasen v, w ergibt sich der Modulationsgrad m in ähnlicher Weise. Bei Über- oder Unterschreiten des ersten Schwellwertes $U_{DCS1}$ und bei Überschreiten des Modulationsgradschwellwertes $S_m$ wird dann der Modulationsgrad m erfindungsgemäss durch Auswahl einer Abfolge PM aus den vorgegebenen Abfolgen PM für einen wählbaren Zeitraum verringert. Vorteilhaft kann durch die Verringerung des Modulationsgrades m für einen bestimmten wählbaren Zeitraum die erste Gleichspannung $U_{DC1}$ beziehungsweise die zweite Gleichspannung $U_{DC2}$ sehr einfach beeinflusst werden, da durch die Verringerung des Modulationsgrades m die aus dem ersten Kondensator $C_1$ beziehungsweise aus dem zweiten Kondensator $C_2$ bezogene Energie verringert wird. Dies geschieht derart, dass Ungleichheiten in den Beträgen zwischen der ersten und zweiten Gleichspannung $U_{DC1}$, $U_{DC2}$ kompensiert werden können und somit eine Symmetrierung des Gleichspannungskreises 1 in sehr einfacher Weise erzielt werden kann. Die Verringerung des Modulationsgrades m mittels einer bestimmten vorgegebenen Abfolge PM von Schaltzuständen für einen bestimmten wählbaren Zeitraum ermöglicht es zudem, die gewünschte Symmetrierung des Gleichspannungskreises 1 auch bei einer hohen Aussteuerung der Umrichterschaltung, d.h. bei einem grossen Modulationsgrad m, insbesondere bei m grösser als 0,8 , zu erreichen.

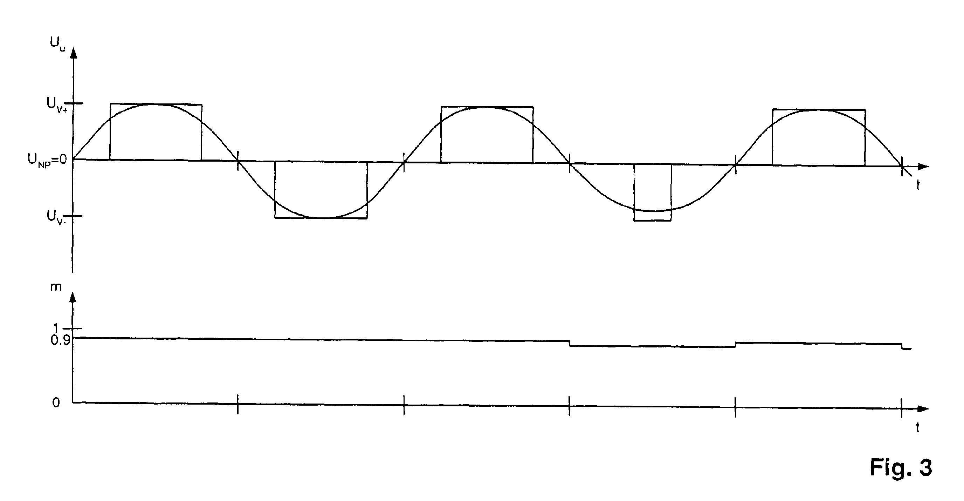

Beim erfindungsgemässen Verfahren hat es sich weiterhin als besonders vorteilhaft erwiesen, als Zeitraum für die Verringerung des Modulationsgrades m einer jeden Phase u, v, w bei motorischem Betrieb der Umrichterschaltung und bei Überschreiten des ersten Schwellwertes $U_{DCS1}$ oder bei generatorischem Betrieb der Umrichterschaltung und bei Unterschreiten des ersten Schwellwertes $U_{DCS1}$ die negative Halbschwingung der zugehörigen Phasenspannungsgrundschwingung zu wählen. In Fig. 3 ist der Zeitverlauf der Phasenspannung $U_u$ und zugehörigem Modulationsgrad beispielhaft für den Fall dargestellt, bei dem die Umrichterschaltung motorisch betrieben wird, d.h. dass zu den Phasen u, v, w elektrische Energie, beispielsweise zu einer elektrischen Last fliesst, und bei dem der erste Schwellwert $U_{DCS1}$ zu irgendeinem Zeitpunkt überschritten, d.h. wenn die erste Gleichspannung $U_{DC1}$ betragsmässig grösser als die zweite Gleichspannung $U_{DC2}$ ist. Es sei an dieser Stelle erwähnt, dass der Zeitverlauf der Phasenspannung $U_u$ und des Modulationsgrades m gemäss Fig. 3 auch für den Fall gilt, bei dem die Umrichterschaltung generatorisch betrieben wird, d.h. dass von den Phasen u, v, w elektrische Energie, beispielsweise von einer elektrischen Last fliesst, und bei dem der erste Schwellwert $U_{DCS1}$ zu irgendeinem Zeitpunkt unterschritten wird, d.h. wenn die erste Gleichspannung $U_{DC1}$ betragsmässig kleiner als die zweite Gleichspannung $U_{DC2}$ ist. Der Vollständigkeit halber ist in Fig. 3 der Zeitverlauf der zur Phasenspannung $U_u$ zugehörigen Phasenspannungsgrundschwingung eingezeichnet. Zeitverläufe der anderen Phasenspannungen $U_v$, $U_w$, welche der Übersichtlichkeit halber in Fig. 3 nicht dargestellt sind, würden sich aus der Phasenspannung $U_u$ durch eine Phasenverschiebung um 120° beziehungsweise um 240° ergeben.

Ferner hat es sich als sehr vorteilhaft gezeigt, wenn als Zeitraum für die Verringerung des Modulationsgrades m einer jeden Phase u, v, w bei generatorischem Betrieb der Umrichterschaltung und bei Überschreiten des ersten Schwellwertes $U_{DCS1}$ oder bei motorischem Betrieb der Umrichterschaltung und bei Unterschreiten des ersten Schwellwertes $U_{DCS1}$ die positive Halbschwingung der zugehörigen Phasenspannungsgrundschwingung gewählt wird.

Der vorstehend für die einzelnen Fälle genannte jeweilige Zeitraum entspricht der bereits erwähnten ersten beziehungsweise zweiten Hälfte der Periodendauer der entsprechenden Phasenspannung $U_u$, $U_v$, $U_w$. Vorteilhaft kann durch die Verringerung des Modulationsgrades m für den vorstehend genannten jeweiligen Zeitraum die erste Gleichspannung $U_{DC1}$ beziehungsweise die zweite Gleichspannung $U_{DC2}$ fallspezifisch, d.h. je nach Betriebszustand der Umrichterschaltung, sehr einfach beeinflusst werden und zwar derart, dass Ungleichheiten in den Beträgen zwischen der ersten und zweiten Gleichspannung $U_{DC1}$, $U_{DC2}$ kompensiert werden können und somit eine Symmetrierung des Gleichspannungskreises 1 in sehr einfacher Weise erreicht werden kann.

Vorzugsweise wird zur Verringerung des Modulationsgrades m eine Abfolge gewählt, welche den Modulationsgrad m in der Grössenordnung um 1% bis 2% bezüglich des eigentlich zu diesem Zeitpunkt vorgesehenen Modulationsgrades m verringert.

Wie bereits vorstehend detailliert beschrieben wurde, werden bei einem Modulationsgrad m unterhalb des Modulationsgradschwellwertes $S_m$ und bei Überschreiten oder Unterschreiten des ersten Schwellwertes

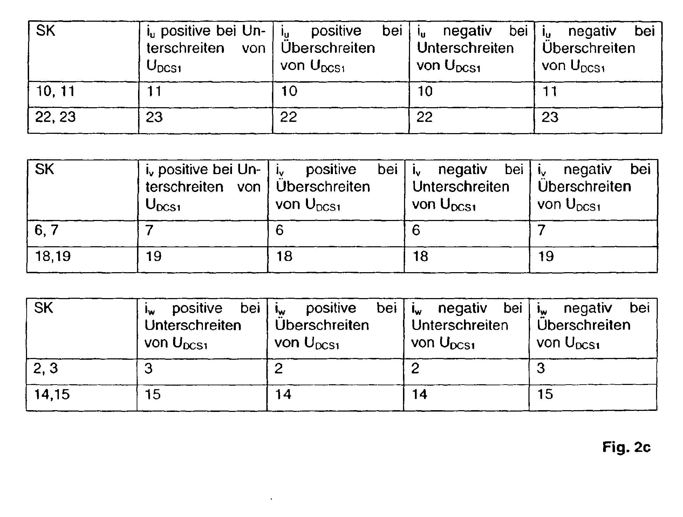

$U_{DCS1}$ die Phasen u, v, w nach einer aus den Schaltzustandskombinationen SK in Abhängigkeit der vorangehenden Schaltzustandskombination SK, der Flussrichtung eines Phasenstromes $i_u$, $i_v$, $i_w$ und des Überschreitens oder des Unterschreitens des ersten Schwellwertes $U_{DCS1}$ ausgewählten Schaltzustandskombination SK mit dem ersten Hauptanschluss $V_+$, mit dem zweiten Hauptanschluss $V_-$ oder mit dem Teilanschluss NP verbunden. Vorzugsweise wird bei der ausgewählten Schaltzustandskombination SK nur eine Anzahl der Phasen u, v, w mit dem ersten Hauptanschluss $V_+$ und die restliche Anzahl der Phasen u, v, w mit dem Teilanschluss NP oder nur eine Anzahl der Phasen u, v, w mit dem zweiten Hauptanschluss $V_-$ und der restliche Teil der Phasen u, v, w mit dem Teilanschluss NP verbunden wird. Diese ausgewählten Schaltzustandskombinationen SK sind in einer Tabelle gemäss Fig. 2c zusammengestellt, treten paarweise auf und sind aus Fig. 2a ausgewählte Schaltzustandkombinationen SK. Soll beispielsweise gemäss Fig. 2a von der Schaltzustandskombination SK=12 über SK=10 oder SK=11 nach SK=13 geschaltet werden und fliesst gemäss Fig. 2c ein positiver Phasenstrom $i_u$ der Phase u, d.h. die Flussrichtung des Phasenstromes $i_u$ ist wie in Fig. 1 gezeigt zur entsprechenden Phase u, beispielsweise zu einer elektrischen Last, gerichtet, und ist der erste Schwellwert $U_{DCS1}$ überschritten, dann wird gemäss Fig. 2c als Schaltzustandskombination SK =10 gewählt. Mittels der ausgewählten Schaltzustandskombinationen SK gemäss Fig. 2c wird somit mit Vorteil erreicht, dass Ungleichheiten in den Beträgen zwischen der ersten und zweiten Gleichspannung $U_{DC1}$, $U_{DC2}$ sehr spezifisch, d.h. nach den Fallunterscheidungen gemäss Fig. 2c, ausgeglichen werden können und somit eine Symmetrierung des Gleichspannungskreises 1 in sehr einfacher Weise und ohne nennenswerte Schaltverluste der Umrichterschaltung erzielt werden kann. Weiterhin kann eine Symmetrierung des Gleichspannungskreises 1 durch die vorstehend beschriebene Massnahme schnell und ohne Spannungsänderung für eine an die Phasen u, v, w angeschlossenen elektrischen Last.

Der erste Schwellwert $U_{DCS1}$ wird vorzugsweise in der Grössenordnung zwischen 0 und 0.03 gewählt, so dass auftretende Ungleichheiten in den Beträgen zwischen der ersten und zweiten Gleichspannung $U_{DC1}$, $U_{DC2}$ durch die vorstehend genannten Verfahrensschritte bei Überschreiten und Unterschreiten des ersten Schwellwertes $U_{DCS1}$ sehr frühzeitig und damit sehr schnell ausgeglichen werden können.

Desweiteren wird der Modulationsgradschwellwert $S_m$ vorzugsweise in der Grössenordnung von 0,8 gewählt, so dass auftretende Ungleichheiten in den Beträgen zwischen der ersten und zweiten Gleichspannung $U_{DC1}$, $U_{DC2}$ durch die vorstehend genannten Verfahrensschritte bei Überschreiten und Unterschreiten des ersten Schwellwertes $U_{DCS1}$ und bei Überschreiten des Modulationsgradschwellwertes $S_m$ sehr frühzeitig und damit sehr schnell ausgeglichen werden können.

Beim erfindungsgemässen Verfahren wird der Gleichspannungsdifferenzwert $\overline{U_{NP}}$ zudem auf einen vorgebbaren zweiten Schwellwert $U_{DCS2}$ hin überwacht. Der zweite Schwellwert $U_{DCS2}$ ist dabei betragsmässig grösser als der erste Schwellwert $U_{DCS1}$. Bei Überschreiten des ersten Schwellwertes $U_{DCS1}$ und bei Überschreiten des zweiten Schwellwertes $U_{DCS2}$ wird gemäss Fig. 1 erfindungsgemäss eine erste parallel zum ersten Kondensator $C_1$ geschaltete Spannungsreduziereinrichtung 2 betätigt. Bei Unterschreiten des ersten Schwellwertes $U_{DCS1}$ und bei Unterschreiten des zweiten Schwellwertes $U_{DCS2}$ wiederum wird eine zweite parallel zum zweiten Kondensator $C_2$ geschaltete Spannungsreduziereinrichtung 3 betätigt. Die Betätigung der ersten oder zweiten Spannungsreduziereinrichtung 2, 3 kann sowohl bei unterschrittenem Modulationsgradschwellwert $S_m$ oder bei bereits überschrittenem Modulationsgradschwellwert $S_m$ und der darauf folgenden und vorstehend bereits im Detail erläuterten Verringerung des Modulationsgrades m erfolgen. Massgebend für die Betätigung der ersten oder zweiten Spannungsreduziereinrichtung 2, 3 ist nur das Überschreiten oder Unterschreiten des zweiten Schwellwertes $U_{DCS2}$. Gemäss Fig. 1 ist die erste und zweite Spannungsreduziereinrichtung 2, 3 jeweils durch einen Widerstand und einen in Serie zum Widerstand geschalteten Schalter gebildet, wobei und die erste und zweite Spannungsreduziereinrichtung 2, 3 durch Schliessen des zugehörigen Schalters betätigt wird. Vorzugsweise erfolgt die Schliessung des ersten Schalters unmittelbar bei Überschreiten des zweiten Schwellwertes $U_{DCS2}$ und die Schliessung des zweiten Schalters unmittelbar bei Unterschreiten des zweiten Schwellwertes $U_{DCS2}$. Vorteilhaft wird bei der Betätigung des jeweiligen Schalters Energie des zugehörigen Kondensators $C_1$, $C_2$ in Wärme im zugehörigen Widerstand umgesetzt und somit die zugehörige Gleichspannung $U_{DC1}$, $U_{DC2}$ einfach, schnell und effektiv verringert, so dass die betragsmässige Angleichung der beiden Gleichspannungen $U_{DC1}$, $U_{DC2}$ in erwünschtem Masse erfolgt. Vorzugsweise erfolgt die Betätigung der ersten und zweiten Spannungsreduziereinrichtung jeweils für eine vorgegebene Zeitdauer. Diese Zeitdauer wird vorzugsweise in Abhängigkeit der thermischen Kapazität des Widerstandes vorgegeben.

Insgesamt stellt das erfindungsgemässe Verfahren zur Symmetrierung des Gleichspannungskreises 1 der Umrichterschaltung zur Schaltung von drei Spannungsniveaus eine sehr einfache, effiziente und somit kostengünstige Lösung dar, Ungleichheiten in den Beträgen der Gleichspannungen $U_{DC1}$, $U_{DC2}$ an den Kondensatoren $C_1$, $C_2$ des Gleichspannungskreises 1 bei einer hohen Aussteuerung der Umrichterschaltung zu kompensieren.

**Bezugszeichenliste**

1 Gleichspannungskreis
2 erste Spannungsreduziereinrichtung
3 zweite Spannungsreduziereinrichtung
4 Teilumrichtersystem
5 erste Schaltgruppe
6 zweite Schaltgruppe
7 dritte Schaltgruppe

**Patentansprüche**

1. Verfahren zur Symmetrierung eines Gleichspannungskreises einer Umrichterschaltung zur Schaltung von drei Spannungsniveaus, bei dem der Gleichspannungskreis (1) durch einen ersten Kondensator ($C_1$) und durch einen in Serie zum ersten Kondensator ($C_1$) geschalteten zweiten Kondensator ($C_2$) gebildet ist und am ersten Kondensator ($C_1$) einen ersten Hauptanschluss ($V_+$), am zweiten Kondensator ($C_2$) einen zweiten Hauptanschluss ($V_-$) und einen durch die zwei seriell verbundenen Kondensatoren ($C_1$, $C_2$) gebildeten Teilanschluss (NP) aufweist und aus einer am ersten Kondensator ($C_1$) anliegenden ersten Gleichspannung ($U_{DC1}$) und aus einer am zweiten Kondensator ($C_2$) anliegenden zweiten Gleichspannung ($U_{DC2}$) ein Gleichspannungsdifferenzwert ($\overline{U_{NP}}$) gebildet wird,

bei dem jede Phase (u, v, w) der Umrichterschaltung durch Leistungshalbleiterschalter der Umrichterschaltung nach jeweils einer vorgegebenen Abfolge (PM) von Schaltzuständen innerhalb einer vorgegebenen Zeitdauer mit dem ersten Hauptanschluss ($V_+$), mit dem zweiten Hauptanschluss ($V_-$) oder mit dem Teilanschluss (NP) verbunden wird, wobei die Schaltzustände der Phasen (u, v, w) zueinander durch Schaltzustandskombinationen (SK) vorgegeben sind,

bei dem der Gleichspannungsdifferenzwert ($\overline{U_{NP}}$) auf einen vorgebbaren ersten Schwellwert ($U_{DCS1}$) hin überwacht wird, und

bei dem bei Überschreiten oder Unterschreiten des ersten Schwellwertes ($U_{DCS1}$) die Phasen (u, v, w) nach einer aus den Schaltzustandskombinationen (SK) in Abhängigkeit der vorangehenden Schaltzustandskombination (SK), der Flussrichtung eines Phasenstromes ($i_u$, $i_v$, $i_w$) und des Überschreitens oder des Unterschreitens des ersten Schwellwertes ($U_{DCS1}$) ausgewählten Schaltzustandskombination (SK) mit dem ersten Hauptanschluss ($V_+$), mit dem zweiten Hauptanschluss ($V_-$) oder mit dem Teilanschluss (NP) verbunden werden, **dadurch gekennzeichnet,**
**dass** der Modulationsgrad (m) für jede Phase (u, v, w) fortlaufend ermittelt wird und auf einen vorgebbaren Modulationsgradschwellwert ($S_m$) hin überwacht wird, und
**dass** bei Überschreiten oder Unterschreiten des ersten Schwellwertes ($U_{DCS1}$) und bei Überschreiten des Modulationsgradschwellwertes ($S_m$) der Modulationsgrad (m) durch Auswahl einer Abfolge (PM) aus den vorgegebenen Abfolgen (PM) für einen wählbaren Zeitraum verringert wird.

2. Verfahren nach Anspruch 1, **dadurch gekennzeichnet, dass** als Zeitraum für die Verringerung des Modulationsgrades (m) einer jeden Phase (u, v, w) bei motorischem Betrieb der Umrichterschaltung und bei Überschreiten des ersten Schwellwertes ($U_{DCS1}$) oder bei generatorischem Betrieb der Umrichterschaltung und bei Unterschreiten des ersten Schwellwertes ($U_{DCS1}$) die negative Halbschwingung der zugehörigen Phasenspannungsgrundschwingung gewählt wird.

3. Verfahren nach einem der Ansprüche 1 oder 2 **dadurch gekennzeichnet, dass** als Zeitraum für die Verringerung des Modulationsgrades (m) einer jeden Phase (u, v, w) bei generatorischem Betrieb der Umrichterschaltung und bei Überschreiten des ersten Schwellwertes ($U_{DCS1}$) oder bei motorischem Betrieb der Umrichterschaltung und bei Unterschreiten des ersten Schwellwertes ($U_{DCS1}$) die positive Halbschwingung der zugehörigen Phasenspannungsgrundschwingung gewählt wird.

4. Verfahren einem der vorhergehenden Ansprüche, **dadurch gekennzeichnet, dass** bei der ausgewählten Schaltzustandskombination (SK) nur eine Anzahl der Phasen (u, v, w) mit dem ersten Hauptanschluss ($V_+$) und die restliche Anzahl der Phasen (u, v, w) mit dem Teilanschluss (NP) oder nur eine Anzahl der Phasen (u, v, w) mit dem zweiten Hauptanschluss ($V_-$) und der restliche Teil der Phasen (u, v, w) mit dem Teilanschluss (NP) verbunden wird.

5. Verfahren nach einem der vorhergehenden Ansprüche, **dadurch gekennzeichnet, dass** der erste Schwellwert ($U_{DCS1}$) in der Grössenordnung von zwischen 0 und 0.03 gewählt wird.

6. Verfahren nach einem der vorhergehenden Ansprüche, **dadurch gekennzeichnet, dass** der Modulationsgradschwellwert ($S_m$) in der Grössenordnung von 0,8 gewählt wird.

7. Verfahren nach einem der vorhergehenden Ansprüche, **dadurch gekennzeichnet, dass** der Gleich-

spannungsdifferenzwert ($\overline{U_{NP}}$) auf einen vorgebbaren zweiten Schwellwert ($U_{DCS2}$) hin überwacht wird, bei Überschreiten des ersten Schwellwertes ($U_{DCS1}$) und bei Überschreiten des zweiten Schwellwertes ($U_{DCS2}$) eine erste parallel zum ersten Kondensator ($C_1$) geschaltete Spannungsreduziereinrichtung (2) betätigt wird, und

dass bei Unterschreiten des ersten Schwellwertes ($U_{DCS1}$) und bei Unterschreiten des zweiten Schwellwertes ($U_{DCS2}$) eine zweite parallel zum zweiten Kondensator ($C_2$) geschaltete Spannungsreduziereinrichtung (3) betätigt wird.

8. Verfahren nach Anspruch 7, **dadurch gekennzeichnet, dass** die erste und zweite Spannungsreduziereinrichtung (2, 3) jeweils durch einen Widerstand und einen in Serie zum Widerstand geschalteten Schalter gebildet ist und die erste und zweite Spannungsreduziereinrichtung (2, 3) durch Schliessen des zugehörigen Schalters betätigt wird.

9. Verfahren nach Anspruch 7 oder 8, **dadurch gekennzeichnet, dass** die Betätigung der ersten und zweiten Spannungsreduziereinrichtung (2, 3) jeweils für eine vorgegeben Zeitdauer erfolgt.

## Claims

1. Method for balancing a DC voltage circuit of a converter circuit for switching three voltage levels, in the case of which the DC voltage circuit (1) is formed by a first capacitor ($C_1$) and by a second capacitor ($C_2$) connected in series with the first capacitor ($C_1$), and has a first main terminal ($V_+$) at the first capacitor ($C_1$), a second main terminal ($V_-$) at the second capacitor ($C_2$) and has a secondary terminal (NP) formed by the two capacitors ($C_1$, $C_2$) connected in series, and a differential DC voltage value ($\overline{U_{NP}}$) is formed from a first DC voltage ($U_{DC1}$) present at the first capacitor ($C_1$) and from a second DC voltage ($U_{DC2}$) present at the second capacitor ($C_2$), in the case of which within a prescribed time period each phase (u, v, w) of the converter circuit is connected by power semiconductor switches of the converter circuit in accordance in each case with a prescribed sequence (PM) of switching states to the first main terminal ($V_+$), to the second main terminal ($V_-$) or to the secondary terminal (NP), the switching states of the phases (u, v, w) being prescribed relative to one another by switching state combinations (SK), in the case of which the differential DC voltage value

($\overline{U_{NP}}$) is monitored for a prescribable first threshold value ($U_{DCS1}$), and

in the case of which upon overshooting or undershooting of the first threshold value ($U_{DCS1}$) the phases (u, v, w) are connected to the first main terminal ($V_+$), to the second main terminal ($V_-$) or to the secondary terminal (NP) in accordance with a switching state combination (SK) selected from the switching state combinations (SK) as a function of the preceding switching state combination (SK), of the flow direction of a phase current ($i_u$, $i_v$, $i_w$) and of the overshooting or the undershooting of the first threshold value ($U_{DCS1}$),

**characterized in that**

the modulation depth (m) is continuously determined for each phase (u, v, w) and is monitored for a prescribable modulation depth threshold value ($S_m$), and

**in that** upon overshooting or undershooting of the first threshold value ($U_{DCS1}$) and upon overshooting of the modulation depth threshold value ($S_m$), the modulation depth (m) is reduced by selecting a sequence (PM) from the prescribed sequences (PM) for a selectable time interval.

2. Method according to Claim 1, **characterized in that** the negative half wave of the associated phase voltage fundamental component is selected as time interval for reducing the modulation depth (m) of each phase (u, v, w) in the event of motor operation of the converter circuit, and given overshooting of the first threshold value ($U_{DCS1}$), or in the event of generator operation of the converter circuit, and given undershooting of the first threshold value ($U_{DCS1}$).

3. Method according to either of Claims 1 and 2, **characterized in that** the positive half wave of the associated phase voltage fundamental component is selected as time interval for reducing the modulation depth (m) of each phase (u, v, w) in the event of generator operation of the converter circuit, and given overshooting of the first threshold value ($U_{DCS1}$) or in the event of motor operation of the converter circuit, and given undershooting of the first threshold value ($U_{DCS1}$).

4. Method according to one of the preceding claims, **characterized in that** in the case of the selected switching state combination (SK) only a number of the phases (u, v, w) are connected to the first main terminal ($V_+$), and the remaining number of the phases (u, v, w) are connected to the secondary terminal (NP), or only a number of the phases (u, v, w) are connected to the second main terminal ($V_-$) and the remaining portion of the phases (u, v, w) are connected to the secondary terminal (NP).

5. Method according to one of the preceding claims, **characterized in that** the first threshold value ($U_{DCS1}$) is selected with the order of magnitude of between 0 and 0.03.

6. Method according to one of the preceding claims, **characterized in that** the modulation depth threshold value ($S_m$) is selected with the order of magnitude of 0.8.

7. Method according to one of the preceding claims, **characterized in that** the differential DC voltage value ($\overline{U_{NP}}$) is monitored for a prescribable second threshold value ($U_{DCS2}$),
   **in that** a first voltage reduction device (2) connected in parallel with the first capacitor ($C_1$) is actuated given overshooting of the first threshold value ($U_{DCS1}$) and given overshooting of the second threshold value ($U_{DCS2}$), and
   **in that** a second voltage reduction device (3) connected in parallel with the second capacitor ($C_2$) is actuated given undershooting of the first threshold value ($U_{DCS1}$) and given undershooting of the second threshold value ($U_{DCS2}$).

8. Method according to Claim 7, **characterized in that** the first and second voltage reduction devices (2, 3) are respectively formed by a resistor and a switch connected in series with the resistor, and the first and second voltage reduction devices (2, 3) are activated by closing the associated switch.

9. Method according to Claim 7 or 8, **characterized in that** the actuation of the first and second voltage reduction devices (2, 3) is respectively performed for a prescribed time period.

**Revendications**

1. Procédé pour équilibrer un circuit de tension continu d'un circuit convertisseur destiné à commuter trois niveaux de tension, avec lequel le circuit de tension continue (1) est formé par un premier condensateur ($C_1$) et par un deuxième condensateur ($C_2$) branché en série avec le premier condensateur ($C_1$) et présente au niveau du premier condensateur ($C_1$) une première borne principale ($V_+$), une deuxième borne principale ($V_-$) au niveau du deuxième condensateur ($C_2$) et une borne partielle (NP) formée par les deux condensateurs ($C_1$, $C_2$) reliés en série et une valeur de différence de tension continue ($\overline{U_{NP}}$) est formée

à partir d'une première tension continue ($U_{DC1}$) appliquée au premier condensateur ($C_1$) et à partir d'une deuxième tension continue ($U_{DC2}$) appliquée au deuxième condensateur ($C_2$), avec lequel chaque phase (u, v, w) du circuit convertisseur est reliée par des commutateurs à semiconducteur de puissance du circuit convertisseur, à chaque fois selon une séquence prédéfinie (PM) d'états de commutation pendant une période prédéfinie, avec la première borne principale ($V_+$), avec la deuxième borne principale ($V_-$) ou avec la borne partielle (NP), les états de commutation des phases (u, v, w) les uns par rapport aux autres étant prédéfinis par des combinaisons d'états de commutation (SK), avec lequel la valeur de différence de tension continue ($\overline{U_{NP}}$) est surveillée pour détecter une première valeur de seuil ($U_{DCS1}$) pouvant être prédéfinie et avec lequel, en cas de franchissement dans un sens ou dans l'autre de la première valeur de seuil ($U_{DCS1}$), les phases (u, v, w) sont reliées avec la première borne principale ($V_+$), avec la deuxième borne principale ($V_-$) ou avec la borne partielle (NP) d'après une combinaison d'états de commutation (SK) choisie parmi les combinaisons d'états de commutation (SK) en fonction de la combinaison d'états de commutation (SK) précédente, du sens du flux d'un courant de phase ($i_u$, $i_v$, $i_w$) et du franchissement dans un sens ou dans l'autre de la première valeur de seuil ($U_{DCS1}$), **caractérisé en ce que** le degré de modulation (m) pour chaque phase (u, v, w) est déterminé en continu et surveillée pour détecter une valeur de seuil de degré de modulation ($S_m$) pouvant être prédéfinie, et qu'en cas de franchissement dans un sens ou dans l'autre de la première valeur de seuil ($U_{DCS1}$) et de dépassement de la valeur de seuil de degré de modulation ($S_m$), le degré de modulation (m) est réduit pendant une durée au choix en sélectionnant une séquence (PM) parmi les séquences prédéfinies (PM).

2. Procédé selon la revendication 1, **caractérisé en ce que** la période choisie pour la réduction du degré de modulation (m) pour chaque phase (u, v, w) lors d'un fonctionnement en moteur du circuit convertisseur et lors du dépassement de la première valeur de seuil ($U_{DCS1}$) ou lors d'un fonctionnement en générateur du circuit convertisseur et lors du franchissement vers le bas de la première valeur de seuil ($U_{DCS1}$), est la demi oscillation négative de l'oscillation fondamentale de la tension de phase correspondante.

3. Procédé selon la revendication 1 ou 2, **caractérisé en ce que** la période choisie pour la réduction du degré de modulation (m) pour chaque phase (u, v, w) lors d'un fonctionnement en générateur du circuit convertisseur et lors du dépassement de la première valeur de seuil ($U_{DCS1}$) ou lors d'un fonctionnement en moteur du circuit convertisseur et lors du franchissement vers le bas de la première valeur de seuil ($U_{DCS1}$), est la demi oscillation positive de l'oscillation fondamentale de la tension de phase correspondante.

4. Procédé selon l'une des revendications précédentes, **caractérisé en ce qu'**avec la combinaison d'états de commutation (SK) sélectionnée, seul un nombre donné de phases (u, v, w) est relié avec la première borne principale ($V_+$) et le reste des phases (u, v, w) est relié avec la borne partielle (NP) ou seul un nombre donné de phases (u, v, w) est relié avec la deuxième borne principale ($V_-$) et le reste des phases (u, v, w) est relié avec la borne partielle (NP).

5. Procédé selon l'une des revendications précédentes, **caractérisé en ce que** la première valeur de seuil ($U_{DCS1}$) est choisie dans un ordre de grandeur entre 0 et 0,03.

6. Procédé selon l'une des revendications précédentes, **caractérisé en ce que** la valeur de seuil de degré de modulation ($S_m$) est choisie dans un ordre de grandeur de 0,8.

7. Procédé selon l'une des revendications précédentes, **caractérisé en ce que** là valeur de différence de tension continue ($\overline{U_{NP}}$) est surveillée pour détecter une deuxième valeur de seuil ($U_{DCS2}$) pouvant être prédéfinie, un premier dispositif de réduction de la tension (2) branché en parallèle avec le premier condensateur ($C_1$) est actionné en cas de dépassement de la première valeur de seuil ($U_{DCS1}$) et en cas de dépassement de la deuxième valeur de seuil ($U_{DCS2}$) et qu'un deuxième dispositif de réduction de la tension (3) branché en parallèle avec le deuxième condensateur ($C_2$) est actionné en cas de franchissement vers le bas de la première valeur de seuil ($U_{DCS1}$) et en cas de franchissement vers le bas de la deuxième valeur de seuil ($U_{DCS2}$).

8. Procédé selon la revendication 7, **caractérisé en ce que** le premier et le deuxième dispositif de réduction de la tension (2, 3) sont respectivement formés par une résistance et un commutateur branché en série avec la résistance et le premier et le deuxième dispositif de réduction de la tension (2, 3) sont actionnés en fermant le commutateur associé.

9. Procédé selon la revendication 7 ou 8, **caractérisé en ce que** l'actionnement du premier et du deuxième dispositif de réduction de la tension (2, 3) s'effectue à chaque fois pendant une durée prédéfinie.

Fig. 1

**Fig. 2a**

Fig. 2b

| SK | $i_u$ positive bei Unterschreiten von $U_{DCS1}$ | $i_u$ positive bei Überschreiten von $U_{DCS1}$ | $i_u$ negativ bei Unterschreiten von $U_{DCS1}$ | $i_u$ negativ bei Überschreiten von $U_{DCS1}$ |
|---|---|---|---|---|
| 10, 11 | 11 | 10 | 10 | 11 |
| 22, 23 | 23 | 22 | 22 | 23 |

| SK | $i_v$ positive bei Unterschreiten von $U_{DCS1}$ | $i_v$ positive bei Überschreiten von $U_{DCS1}$ | $i_v$ negativ bei Unterschreiten von $U_{DCS1}$ | $i_v$ negativ bei Überschreiten von $U_{DCS1}$ |
|---|---|---|---|---|
| 6, 7 | 7 | 6 | 6 | 7 |
| 18,19 | 19 | 18 | 18 | 19 |

| SK | $i_w$ positive bei Unterschreiten von $U_{DCS1}$ | $i_w$ positive bei Überschreiten von $U_{DCS1}$ | $i_w$ negativ bei Unterschreiten von $U_{DCS1}$ | $i_w$ negativ bei Überschreiten von $U_{DCS1}$ |
|---|---|---|---|---|
| 2, 3 | 3 | 2 | 2 | 3 |
| 14,15 | 15 | 14 | 14 | 15 |

Fig. 2c

Fig. 3

15